# EUROPEAN PATENT APPLICATION

(11) **EP 4 480 705 A1**
(43) Date of publication of application: **25.12.2024**
(21) Application number: 23180933.6
(22) Date of filing: 22.06.2023
(51) Int. Cl.: B33Y 70/00, C22C 33/02, C22C 38/00, C22C 38/02, C22C 38/04, C22C 38/44, C22C 38/46, C22C 38/48, C22C 38/50, C22C 38/54, B22F 10/25, B22F 10/28

(54) **STEEL POWDER FOR USE IN ADDITIVE MANUFACTURING PROCESSES**

(71) Applicant: SSAB Technology AB, 101 21 Stockholm (SE)
(72) Inventor: Broberg, Gunnar, 613 80 Oxelösund (SE); Fager, Ulrika, 613 80 Oxelösund (SE); Mikaelsson, Fredrik, 613 80 Oxelösund (SE); Haglund, Teodor, 613 80 Oxelösund (SE); Svanberg, Arvid, 613 80 Oxelösund (SE)
(74) Representative: Valea AB

(57) **Abstract**

A steel powder for use in additive manufacturing processes. The steel powder has a composition comprising (in wt. %):
C
0.25-0.40,
Si
0.80-1.35,
Mn
0.5-1.0,
Cr
1.1-1.6,
Ni
0.4-1.3,
Mo
0.6-1.0,
V
0.05-0.25,
N
equal to or less than 0.025,

optionally Nb equal to or less than 0.03,
optionally Ti equal to or less than 0.02,
optionally B equal to or less than 0.005,
balance Fe and unavoidable impurities.

## Description

### TECHNICAL FIELD

The present disclosure relates in general to a steel powder for use in additive manufacturing processes. The present disclosure further relates in general to a method for producing a component using the steel powder.

### BACKGROUND

The efforts to improve various tools, such as molds, dies or the like, have increased the awareness of the benefits of additive manufacturing (AM) processes. Additive manufacturing, sometimes also referred to as additive layer manufacturing (ALM), is a technology for producing three-dimensional objects of, for example, metallic materials by building up the object layer by layer. One of the main advantages of this technology is that it enables producing objects having a complex design, which may be very difficult or even impossible to produce by other methods. Thus, additive manufacturing opens up new possibilities for producing objects which may have a better configuration for the intended use thereof. For example, tools comprising non-straight (such as meandering or helical) internal channels for cooling mediums may be achieved. Such internal channels may not be possible to produce by other methods, such as drilling.

Additive manufacturing is a generic term encompassing various different processes. Examples of such processes include laser powder bed fusion (L-PBF), sometimes also referred to as selective laser melting, and directed energy deposition (DED). In L-PBF, a thin powder layer is first applied on a building platform. This takes place inside a gas-tight chamber that contains inert gas, for example argon or nitrogen, with extremely low oxygen levels. A laser beam selectively melts the layer of powder. Then the platform is gradually lowered, and a new powder layer is applied. After that, the laser beam melting operation is repeated. The process is repeated until the desired component has been obtained and may be removed from the powder bed. In contrast, in directed energy deposition, the material feedstock, which may be either a powder or a wire, is melted by a heat source and deposited in melted form onto a specified surface where it solidifies and thereby fuses with a previously formed layer. Examples of heat sources in directed energy deposition include laser, electron beam or a gas-tungsten arc. This process is also typically performed in a controlled chamber with reduced oxygen levels.

Additive manufacturing is still an emerging market and there is still a need to develop new powders suitable both for the additive manufacturing process as such, and which may enable sufficient properties in the as-built condition to the meet the requirements of the components to be produced therefrom. The metallurgy of additive manufacturing is very different from the metallurgy during conventional manufacturing methods, which includes casting. This is *inter alia* due to the surface chemistry of the powder. Furthermore, the considerably higher solidification and cooling rates associated with additive manufacturing, and the remelting of the material occurring during formation of the layers, may lead to differences in microstructure of the material compared in case of to conventional methods, and hence also in the properties of the component produced. This is one of the major difficulties when desiring to utilize additive manufacturing in the production of components which, in addition to a particular design, should be able to meet for example pre-identified mechanical requirements.

CN113996806A discloses a selective laser melting method in which a steel powder comprising 0.28-0.34 wt.-% C, 0.8-1.1 wt.-% Mn, 0.9-1.2 wt.-% Si, 0.8-1.2 wt.-% Cr, 1.4-1.6 wt.-% Ni, and 0-0.25 wt.-% Cu is used.

WO 2020/221812 A1 discloses a steel material in powder form, intended for selective laser melting or selective laser sintering, comprising 0.17-0.23 wt.-% C, 0.10-0.80 wt.-% Si, 0.15-0.45 wt.-% Mn, 0.8-2.0 wt.-% Cr, 0.15-0.80 wt.-% Mo, 0.1-2.0 wt.-% Ni, and 0.1-2.0 wt.-% V.

WO 2023/083899 A1 discloses a steel powder for use in additive manufacturing processes comprising 0.15-0.26 wt.-% C, 0.5-1.5 wt.-% Si, 0.5-1.0 wt.-% Mn, 0.5-1.5 wt.-% Cr, 0.1-0.4 wt.-% Mo, 0.05-0.15 wt.-% V, optionally Nb equal to or less than 0.03 wt.-%, optionally Ti equal to or less than 0.02 wt.-%, and optionally B equal to or less than 0.005 wt.-%.

### SUMMARY

The object of the present invention is to provide a steel powder suitable for additive manufacturing, and which results in a good balance of mechanical properties, in particular hardness and strength, in a component produced thereof.

The object is achieved by the subject-matter of the appended independent claim(s). Various embodiments are defined by the dependent claims.

In accordance with the present disclosure, a steel powder for use in additive manufacturing processes is provided. The steel powder has the following composition in percent by weight (wt.-%):

| | |
|---|---|
| C | 0.25 - 0.40, |
| Si | 0.80 - 1.35, |
| Mn | 0.5 - 1.0, |
| Cr | 1.1 - 1.6, |
| Ni | 0.4 - 1.3, |
| Mo | 0.6 - 1.0, |
| V | 0.05 - 0.25, |
| N | equal to or less than 0.025, |

optionally Nb equal to or less than 0.03,
optionally Ti equal to or less than 0.02,
optionally B equal to or less than 0.005,
balance Fe and unavoidable impurities;
wherein the unavoidable impurities P, S, Cu and Al are limited to:

| | |
|---|---|
| P | equal to or less than 0.03, |
| S | equal to or less than 0.01, |
| Cu | equal to or less than 0.2, and |
| Al | equal to or less than 0.07. |

The present disclosure also relates to the use of the above described steel powder in the production of components by additive manufacturing. The additive manufacturing process used may for example be a laser powder bed fusion (L-PBF) process or a directed energy deposition (DED) process.

Moreover, the present disclosure relates to a method for producing a component comprising performing additive manufacturing using the above-described steel power. The component may for example be a tool, a general engineering component or an automotive component, but is not limited thereto. Examples of tools include various dies or molds.

By means of the herein described steel powder, it is possible to obtain a microstructure comprising at least 90 vol-% martensite (or even at least 95 vol.-% martensite) with finely dispersed nano-sized carbides in a component produced by additive manufacturing already in the as-built condition. The amount of martensite may, if desired, be increased by heat treatments therefore as known in the art. Furthermore, it is possible to obtain a relative density of more than 99.5%, typically at least 99.9%, in the as-built condition.

Moreover, by means of the herein described steel powder, it is possible to obtain the following properties after additive manufacturing already in as-built condition:
- a yield strength of at least 1100 MPa determined according to ISO 6892-1:2019,
- a tensile strength of at least 1250 MPa determined according to ISO 6892-1:2019,
- an elongation of at least 10% determined according to ISO 6892-1:2019,
- a hardness of at least 390 HV determined according to ISO 6507-1:2018, and
- an impact toughness of at least 65 J determined according to ISO 148-1:2016.

### DETAILED DESCRIPTION

The invention will be described in more detail below with reference to exemplifying embodiments. The invention is however not limited to the exemplifying embodiments discussed, but may be varied within the scope of the appended claims.

When ranges are disclosed in the present disclosure, such ranges include the end values of the range, unless explicitly disclosed otherwise. Similarly, if an open range is disclosed, the open range also includes the single end value of the open range, unless explicitly disclosed otherwise.

The present disclosure provides a steel powder, more specifically a tool and engineering steel powder, which is intended to be used in one or more additive manufacturing processes. The steel powder is particularly useful for use in laser powder bed fusion processes or in directed energy deposition processes. The steel powder has a composition which comprises, in percent by weight (wt.-%):

| | |
|---|---|
| C | 0.25 - 0.40, |
| Si | 0.80 - 1.35, |
| Mn | 0.5 - 1.0, |
| Cr | 1.1 - 1.6, |
| Ni | 0.4 - 1.3, |
| Mo | 0.6 - 1.0, |
| V | 0.05 - 0.25, |
| N | equal to or less than 0.025, |

optionally Nb equal to or less than 0.03,
optionally Ti equal to or less than 0.02,
optionally B equal to or less than 0.005,
balance Fe and unavoidable impurities;
wherein the unavoidable impurities P, S, Cu and Al are limited to:

| | |
|---|---|
| P | equal to or less than 0.03, |
| S | equal to or less than 0.01, |
| Cu | equal to or less than 0.2, and |
| Al | equal to or less than 0.07. |

In the following, the importance of the different alloying elements of the steel powder will be briefly discussed. All percentages for the chemical composition are given in weight-% (wt.-%), unless explicitly disclosed otherwise. Upper and lower limits of the individual elements of the composition can be freely combined within the broadest limits set out in the claims, unless explicitly disclosed otherwise.

### Carbon (C): 0.25 - 0.40 %

Carbon is an important element of the herein described composition since it contributes to the mechanical strength as well as hardness of a component produced from the herein described steel powder. More specifically, carbon forms small carbides with other alloying elements, such as molybdenum and vanadium, which contribute to increased strength and hardness. Carbon also contributes to increased strength due to solid solution strengthening. Furthermore, carbon may also reduce the melting temperature of the steel alloy, which facilitates the atomizing process used to produce the steel power. Therefore, the herein described composition comprises at least 0.25% of C. Preferably, carbon is present in an amount of equal to or more than 0.27%, or even equal to or more than 0.28%.

However, too high amounts of carbon may result in increased residual stresses in the component produced by additive manufacturing. This in turn increases the risk for distortion of and/or formation of cracks in the component produced. Furthermore, too high contents of carbon may reduce the martensite transformation temperature, which makes it more difficult to obtain the desired martensitic structure. Therefore, carbon should not be added in amounts above 0.40%. Preferably, the carbon content is equal to or less than 0.37%, or even equal to or less than 0.34%.

### Silicon (Si): 0.80 - 1.35 %

Silicon is an effective deoxidizing element frequently used within the steel industry. In additive manufacturing processes, silicon may contribute to binding potential surface oxides of the powder to form nanoscale round oxides which are less harmful to the properties of the component produced than other forms of oxides. Silicon is also added to the herein described composition to increase the hardness of the material as it may contribute to solid solution hardening. Silicon also has the advantage of being able to suppress formation of cementite in the material, which in turn facilitates the precipitation of the desired type of carbides that may contribute to increased strength. Moreover, addition of silicon may also enhance weldability and since many additive manufacturing processes melts and welds the material on micron scale, silicon also enhances the material processing in these processes. Therefore, the present composition comprises at least 0.80 % of silicon. Suitably, the silicon content may be equal to or higher than 0.85 %, or even more preferably equal to or higher than 0.95 %.

However, too high contents of silicon may decrease the impact fracture toughness of the material of the produced component. Therefore, the herein described composition comprises at most 1.35 % Si. Preferably, silicon is present in an amount of equal to or less than 1.30 %, or even more preferred in an amount of equal to or less than 1.20 %.

### Manganese (Mn): 0.5 - 1.0 %

Manganese is an element contributing to increased hardness of a component produced by the herein described steel powder. Manganese also stabilizes the austenite phase and delays transformation of austenite during cooling. The present composition comprises at least 0.5% manganese in order to achieve sufficiently complete martensite transformation and desired hardness. Such a content of manganese also has the advantage of reducing the risk for formation of other harmful metal sulfides, such as FeS that may otherwise lead to embrittlement. Manganese may preferably be present in an amount of at least 0.60 %, or even more preferably in an amount of at least 0.65 %.

However, manganese should not be added in contents above 1.0 % as this may result in segregation in the component produced from the steel powder. Such segregations may affect the microstructure and hence the mechanical properties negatively. Furthermore, a too high manganese content may result in a relatively large amount of retained austenite. This may in turn lead to tempering embrittlement and dimensional instability of the produced component. Preferably, the composition may comprise equal to or less than 0.90 % Mn, or even equal to or less than 0.85 % Mn.

### Chromium (Cr): 1.1 - 1.6 %

Chromium is added to the herein described composition for the purpose of increasing hardenability and to ensure a substantially martensitic structure in a component produced of the herein described steel powder by additive manufacturing. Furthermore, chromium also contributes to increased hardness of the material of the produced component, especially at elevated temperature, such as above 200 ^{°}°C or 300 ^{°}°C. Therefore, the herein described composition comprises at least 1.1 % of Cr. Preferably, chromium is added in an amount of equal to or more than 1.2%, or even equal to or more than 1.25%.

However, too high additions of chromium results in a decrease in weldability and therefore has a negative effect on printability. For said reason, the chromium content should not exceed 1.6%. Preferably, chromium may be present in an amount of equal to or lower than 1.5%, or even equal to or lower than 1.45%.

### Nickel (Ni): 0.4 - 1.3 %

Nickel is added to the herein described composition in an amount of at least 0.4% for the purpose of increasing the hardenability. Higher amounts of nickel may also increase the toughness. Therefore, nickel is suitably present in an amount of equal to or more than 0.5%. Preferably, nickel may be present in an amount of equal to or more than 0.6%.

Higher amounts of nickel may however increase the risk for an unduly high amount of retained austenite, which in turn may decrease the dimensional stability of a component produced by the herein described steel powder. Furthermore, nickel is a relatively expensive austenite stabilizing element and should therefore not be added in amounts higher than necessary. Therefore, the herein described composition comprises at most 1.3% Ni. Suitably, nickel may be present in an amount of equal to or less than 1.2%, or even equal to or less than 1.1%.

### Molybdenum (Mo): 0.6 - 1.0 %

Molybdenum is a strong carbide former and forms carbides that are temperature stable. By adding molybdenum, increased heat softening resistance may be achieved which may be an important property for some tooling applications. Increased heat softening resistance enables the component produced from the steel powder, such as a tool, to maintain its mechanical properties also at elevated temperatures, such as well above 200 °C or 300 °C. Furthermore, molybdenum also has the advantage of contributing to substitutional hardening. Therefore, the present composition comprises at least 0.6% Mo. Preferably, molybdenum is added in an amount of equal to or more than 0.7%.

However, a too high molybdenum content may increase the risk for formation of coarse molybdenum carbides, which in turn may drastically decrease the mechanical properties. Therefore, molybdenum should not be present in amounts above 1.0%. Preferably, molybdenum is present in an amount of equal to or less than 0.9%.

### Vanadium (V): 0.05 - 0.25 %

Vanadium is a strong carbide former which forms small and well dispersed carbides in the matrix. These carbides contribute to increased hardness. Furthermore, the vanadium carbides have the advantage of pining the microstructure, and thereby reducing the risk of unwanted grain growth. Furthermore, vanadium carbides have the advantage of having a relatively slow growing rate at high temperatures. This in turn enables the component produced from the steel powder to maintain its mechanical properties also at elevated temperatures, such as above 200°C or even above 300 °C. Therefore, the herein described composition comprises at least 0.05% of V. Preferably, vanadium may be present in an amount of equal to or more than 0.07%, or even equal to or more than 0.08%.

However, a too high content of vanadium may negatively affect the toughness. Therefore, the herein described composition comprises equal to or less than 0.25% V. Preferably, vanadium may be present in an amount of equal to or less than 0.20%, or even equal to or less than 0.16%.

### Nitrogen (N): equal to or less than 0.025 %

Nitrogen is an element contributing to strength and hardness of the component produced from the steel powder through solution strengthening and/or formation of small nitrides. Nitrogen also contributes to increased hardness. However, too high amounts of nitrogen may lead to formation of unduly large nitrides which could significantly reduce the toughness. Therefore, the herein described steel powder comprises equal to or less than 0.025% of nitrogen. Suitably, nitrogen is present in an amount of equal to or less than 0.020%, or in an amount of equal to or less than 0.018%.

According to a first alternative, nitrogen is purposively included into the herein described composition in an amount of equal to or more than 0.005%. Nitrogen may for example be introduced into the composition of the steel powder by selection of the atomizing medium, and control of the parameters, used during atomization. Suitably, the nitrogen content may be equal to or more than 0.007%.

According to a second alternative, nitrogen may be present in the herein described composition as an impurity. A nitrogen content of less than 0.005 % is in the present disclosure considered to constitute an impurity level.

### Niobium (Nb): optionally up to 0.03 %

Niobium may optionally be added to the composition according to the present disclosure. Like vanadium, niobium is a strong carbide former and may therefore contribute to increased strength and hardness. However, niobium carbides are precipitated at higher temperatures and may be coarser than vanadium carbides. The possible remelting of already consolidated layers when forming a new layer during additive manufacturing may often be insufficient to dissolve already formed niobium carbides, and could possibly instead lead to an undesired growth thereof. Thus, too high contents of niobium may reduce the toughness without further increasing the strength of the material. If present, niobium should not exceed 0.03 %. Suitably, niobium may be present in an amount of equal to or less than 0.025%.

In order to sufficiently contribute to increased strength and hardness, niobium may be added to the herein described composition in an amount of equal to or higher than 0.010%.

### Titanium (Ti): optionally up to 0.02 %

Titanium is a strong carbide and nitride forming element, but results in a type of carbides and/or nitrides that may be harmful to the toughness. TiC and TiN nucleate already at higher temperatures. However, the large cooling rates related to some additive manufacturing methods, like L-PFB, make the material cool fast enough through the temperature window where TiC and TiN particles nucleates. Therefore, additions of titanium up to 0.02% are plausible, if desired. Suitably, titanium may be present in an amount of equal to or less than 0.015%, or even equal to or less than 0.010%.

In case the composition comprises boron, titanium is suitably added in order to avoid, or at least reduce, formation of boron nitrides. Formation of BN reduces the amount of boron in solid solution in the matrix, and thereby a loss of the intended increase in hardenability. Suitably, the titanium content is equal to or more than 0.004%, or even equal to or more than 0.005%.

### Boron (B): optionally up to 0.005 %

Boron may be added for the purpose of increasing hardenability, if desired.Boron may therefore be present in the present composition in an amount of equal to or less than 50 ppm. At amounts above 50 ppm, boron loses its effect on hardenability. Preferably, boron may be added to the herein described composition in an amount of from 10 ppm to 40 ppm.

### Unavoidable impurities

In the present disclosure, unavoidable impurities are considered to be impurities resulting from the manufacturing process and/or the raw material used. Suitably, the amount of such impurities may be limited to at most 0.2 % each (except where otherwise specified below), and at most 0.7 % in total.

One example of an unavoidable impurity is phosphorus (P). Phosphorous may have a negative effect on, for example, toughness. Therefore, the phosphorus content is limited to at most 0.03 %. Preferably, the phosphorous content is limited to equal to or less than 0.01 %.

Another example of an unavoidable impurity is sulfur (S). Sulfur is an unwanted element that in combination with other elements forms sulfides. These sulfides can drastically reduce the toughness of the steel. In some tool steels, higher amounts of sulfur may be allowed or even added to increase machinability, but since additive manufacturing is a near net shaping process this is not necessary for the present steel powder. In the present composition, it is important that the sulfur content does not exceed 0.01%. In order to reduce the negative effects on the mechanical properties, the sulfur content should be kept as low as possible. Therefore, the sulfur content is preferably limited to equal to or less than 0.005%, or even equal to or less 0.002%.

Yet another example of an unavoidable impurity is aluminum (Al), which may be allowed in contents of equal to or less than 0.07% without substantially negatively affecting the desired properties. Higher amounts of aluminum may lead to formation of undesired inclusions, which in turn may lead to embrittlement due acting as crack initiations points. Too high amounts of aluminum may also lead to process problems during powder atomization. Suitably, the aluminum content is limited to equal to or less than 0.05%, or even equal to or less than 0.03%.

Moreover, copper (Cu) constitutes an example of an unavoidable impurity of the herein described composition. Copper may be allowed in contents up to 0.2% without substantially negatively affecting the desired properties. Higher amounts of copper may, for example, in some cases lead to a reduction of toughness. However, copper is preferably limited to equal to or less than 0.15%, or even equal to or less than 0.10%.

Other examples of possible unavoidable impurities include oxygen (O), zinc (Zn) and calcium (Ca), but are not limited thereto. The oxygen content may suitably be less than 500 ppm. The zinc content may suitably be less than 100 ppm. Moreover, the calcium content may suitably be less than 100 ppm.

The above-described steel powder may be produced by atomizing a melt of a steel alloy. Such a steel alloy may for example be produced via refining of crude iron (also known as pig iron) in a basic oxygen furnace (BOF), alternatively melting of for example scrap in an electric arc furnace (EAF), followed by additional alloying in for example a ladle furnace to thereby arrive at a steel alloy that would result in the desired composition of the steel powder. The steel alloy may thereafter be remelted in an induction furnace. Preferably, said remelting is performed under inert protective gas atmosphere, e.g. argon. When the melt has reached a desired temperature, the melt may be transferred to an atomizing nozzle, which may be performed for example by tilting the induction furnace or by opening a stopper rod blocking an outlet of the induction furnace.

Atomization is performed by subjecting the melt leaving the atomizing nozzle to an atomization medium. The atomization medium is used to break up the molten stream into fine metal droplets which are thereafter quickly cooled down so as to form metal power particles. Said metal power particles may typically have a size less than 1 mm. Preferably, the atomization parameters may be controlled such that the obtained metal powder particles have a size of less than about 200 µm. The atomization medium may suitable be argon, nitrogen, or any mixture thereof, but is not limited thereto. Atomization using an atomization medium comprising nitrogen may lead to a pick-up of nitrogen and thereby a higher nitrogen content of the resulting powder compared to if using only argon as atomizing medium.

It should be noted that in general, the powder obtained by the atomization process may need to be further processed in order to be suitable for use in an additive manufacturing process. More specifically, it may be needed to subject the obtained powder to one or more further process steps to arrive at a suitable particle size distribution of the powder. In order to obtain the desired powder fractions, the powder can be put through a sieving operation or be air classified, or a combination thereof. During sieving, the powder is transferred through a mesh with a defined opening size. Particles larger than the opening will stay on top of the mesh and the ones that are smaller will be transferred through. The cut point can be chosen by adjusting the mesh opening size. To gain a target particle size distribution of the steel powder, the material can be directly sieved to the target particle size distribution. Alternatively, two or more powders, each having a respective particle size distribution, can be mixed, if desired.

Different additive manufacturing processes use powders with different target particle size intervals. For usage in a directed energy deposition process, a powder particle size between 45-150 µm is suitable, where the lower limit of the interval indicates the D10 value and the upper limit of the interval indicates the D90 value. D10 represents that the portion of particles with diameters smaller than this value is 10%, and D90 represents that the portion of particles with diameters smaller than this value is 90%. For usage in L-PBF (laser powder bed fusion) a powder particle size of 15-63 µm, or even 15-45 µm, can be used, where the lower limit of the interval indicate the D10 value and upper limit of the interval indicate the D90 value. Particle size distribution may be determined according to ISO 13322-2.

A more spherical powder enhances the printability of the powder since it improves the flowability of the powder. A good flowability for example allows the powder to be more closely packed in the layer, which is subsequently melted during an AM process, which in turn for example leads to lower risk for porosity of the as-built material. Sphericity is defined as SPHT=4πA/P2, where A is the measured area covered by a particle projection, P is the measured perimeter/circumference of a particle projection. A sphericity of 1 means that the particle is a perfect sphere. The mean sphericity of the material should preferably be 0.85 or greater. Sphericity may be determined according to ISO 9276-6:2008. The sphericity of the powder is primarily a result from the process of manufacturing the powder.

A component produced by additive manufacturing using the herein described steel powder will typically obtain a microstructure comprising at least 90 vol.-%, or even at least 95 vol.-%, martensite already in the as built condition. Subjecting the as built component to one or more heat treatments may increase the amount martensite further and reduce the amount of retained austenite. For example, the as-built component may be subjected to a suitable tempering temperature for the purpose of converting retained austenite to martensite. Alternatively, the as-built component may be subjected to an austenitization temperature followed by quenching and tempering.

The herein described steel powder may be used for producing a large variety of components by additive manufacturing, such components being intended for a wide variety of applications. For example, such components may include various tools, such as molds or dies. Alternatively, the herein described steel powder may be used for producing general engineering components or various automotive components.

### Experimental results

Two different steel powders were produced by atomization of a respective steel melt. Powder 1 was atomized using argon as atomizing medium, whereas Powder 2 was produced using nitrogen gas as atomizing medium. The compositions, in percent by weight, of the resulting steel powders are specified in Table 1.

Both steel powders were thereafter sieved to obtain a particle size range suitable for laser powder bed fusion (L-PBF). Powder size distribution and aspect ratio for the two steel powders were determined by dynamic image analysis according to ISO 13322-2:2006. Furthermore, the sphericity of the resulting powders was determined according to ISO 9276-6:2008. The determined powder size distribution, aspect ratio, and sphericity for the obtained steel powders are presented in Table 2.

**Table 1.**

| | **Powder 1** | **Powder 2** |
|---|---|---|
| **C** | 0.306 | 0.306 |
| **Si** | 1.04 | 1.05 |
| **Mn** | 0.76 | 0.77 |
| **P** | 0.008 | 0.008 |
| **S** | <0.001 | <0.001 |
| **Cr** | 1.36 | 1.41 |
| **Ni** | 0.70 | 0.70 |
| **Mo** | 0.76 | 0.79 |
| **V** | 0.13 | 0.14 |
| **Ti** | 0.006 | 0.007 |
| **Cu** | 0.013 | 0.013 |
| **Al** | 0.003 | 0.004 |
| **N** | 0.004 | 0.012 |
| **Nb** | 0.017 | 0.017 |
| **B** | 0.0025 | 0.0023 |
| **Zn** | <0.002 | <0.002 |
| **Ca** | <0.0003 | <0.0003 |
| **Fe** | Bal. | Bal. |

**Table 2.**

| | **D10 [µm]** | **D50 [µm]** | **D90 [µm]** | **Aspect ratio** | **Sphericity** |
|---|---|---|---|---|---|
| **Powder 1** | 22 | 32 | 42 | 0.82 | 0.86 |
| **Powder 2** | 24 | 34 | 45 | 0.87 | 0.90 |

Moreover, the flowability of the two steel powders was tested after sieving. For this purpose, a weighted mass of 50g of each steel powder was timed as it flows through an orifice of a Hall Flowmeter funnel. The tests were performed according to ISO 4490:2018 using two different funnels, both funnels falling within the standard. Both steel powders demonstrated a Hall flow well below 30s/50g, irrespectively of the funnel used. This demonstrates that both steel powders have a good flowability making them suitable for use in, for example, a L-PBF process.

The resulting powders were thereafter printed to a plurality of bodies (described in more detail below) for the purpose of investigating properties after printing in as-built condition. All bodies of Powder 1 were printed in the same process (i.e. at the same time) on a common building plate. Similarly, all bodies of Powder 2 were printed in the same process on a common building plate. Printing was performed by selective laser melting using a SLM 280. The process parameters used were: laser power of 212.5 W, laser speed 656 mm/s, layer thickness 30 µm, and hatch distance 0.12 mm.

For the purpose of tensile testing, printing was made to bodies having a cylindrical shape with a diameter of 12 mm and a longitudinal extension of 90 mm. Half of the cylindrical bodies of each steel powder were printed with a building direction along the longitudinal axis of the cylinder, and half of the cylindrical bodies of each steel powder were printed with a building direction along the radial direction of the cylinder. The cylindrical bodies were after printing machined to the configuration of the test samples. Tensile testing, in the as-built condition, was performed according to ISO 6892-1:2019. Table 3 discloses the average results of six samples for Powder 1 and the average results of twelve samples for Powder 2, together with the respective standard deviation. Each sample was taken for a respective printed body.

For the purpose of testing impact toughness, printing was made to bodies having a rectangular shape with the dimensions 12x12x70 mm. Half of said rectangular bodies of each steel powder were printed with a building direction corresponding to the longest extension of the rectangular bodies, and half of the rectangular bodies of each steel powder were printed with a building direction perpendicular to the longest extension of the rectangular bodies. The printed bodies were thereafter machined to the configuration of the samples used for testing. Impact toughness (Charpy V) was tested according to ISO 148-1:2016, at room temperature. Table 3 discloses the average result of six samples for Powder 1 and the average result of twelve samples for Powder 2, together with the standard deviation. Each sample was taken for a respective printed body.

In Table 3, the test planes XY and XZ, respectively, represent the primary plane of fracture during testing. Test plane XY represents a plane parallel to the plane of the building plate used during printing and is thus a plane perpendicular to the building direction. Test plane XZ represents a plane which is perpendicular to the plane of the building plate used during printing and is thus a plane parallel with the building direction. Furthermore, test plane XZ is a plane which is perpendicular to the longest extension of the bodies which were printed with their longest extension parallel to the plane of the building plate. In other words, the tensile test result given for test plane XY represents the cylindrical bodies printed with a building direction along the longitudinal axis of the cylinder, whereas the result for test plane XZ represents the cylindrical bodies printed with a radial building direction. The tensile force is naturally applied in the direction of the longitudinal axis of the samples irrespectively of building direction. Similarly, the impact toughness result in the XY plane represents samples with a building direction corresponding to the longest extension of the rectangular bodies, and the result in XZ plane represents samples with a building direction perpendicular to the longest extension of the rectangular bodies.

**Table 3.**

| **Powder** | **Test plane** | **Yield strength Rp0.2 [MPa]** | **Tensile strength Rm [MPa]** | **Elongation A5 [MPa]** | **Charpy V [MPa]** |
|---|---|---|---|---|---|
| | | Average ± Standard deviation | Average ± Standard deviation | Average ± Standard deviation | Average ± Standard deviation |
| Powder 1 | XY | 1162 ± 55 | 1295 ± 55 | 11 ± 1 | 93 ± 8 |
| | XZ | 1381 ± 15 | 1506 ± 12 | 16 ± 1 | 72 ± 3 |
| Powder 2 | XY | 1267 ± 8 | 1451 ± 7 | 15 ± 2 | 87 ± 10 |
| | XZ | 1394 ± 15 | 1542 ± 11 | 15 ± 1 | 66 ± 2 |

Furthermore, hardness was tested according to ISO 6507-1:2018. For said test, printed rectangular bodies with dimensions 10x20x90 mm were used with building direction corresponding to the longest extension of the respective rectangular bodies. Hardness was determined at different positions along the build direction. The average hardness for the sample built from Powder 1 was found to be 448HV. The average hardness for the sample built from Powder 2 was 422 HV.

Furthermore, the microstructure was investigated using Light Optical Microscopy (LOM). Rectangular bodies with dimension 10x20x90 mm were printed, with building direction along the longest extension of the body. The samples were etched in 2% Nital before analysis. Images at 50x magnifications were taken along the build direction and stitched together. The images were thereafter analyzed using the software ImageJ.

The sample built of Powder 1 showed an area percentage of pores of 0.012%, which means that a relative density of 99.988% was obtained. The average size of the pores (Equivalent Circular Diameter ECD) was 6.19 µm. The sample built of Powder 2 showed an area percentage of pores of 0.007%, which means that a relative density of 99.993% was obtained. The average size of the pores (Equivalent Circular Diameter ECD) was 4.55 µm. Both the sample built from Powder 1 and the sample built from Powder 2 showed a martensitic structure comprising well distributed and small sized carbides.

## Claims

1. A steel powder for use in additive manufacturing processes, the steel powder having the following composition in percent by weight (wt.-%):
| | |
|---|---|
| C | 0.25 - 0.40, |
| Si | 0.80 - 1.35, |
| Mn | 0.5 - 1.0, |
| Cr | 1.1 - 1.6, |
| Ni | 0.4 - 1.3, |
| Mo | 0.6 - 1.0, |
| V | 0.05 - 0.25, |
| N | equal to or less than 0.025, |
optionally Nb equal to or less than 0.03,
optionally Ti equal to or less than 0.02,
optionally B equal to or less than 0.005,
balance Fe and unavoidable impurities;
wherein the unavoidable impurities P, S, Cu and Al are limited to:
| | |
|---|---|
| P | equal to or less than 0.03, |
| S | equal to or less than 0.01, |
| Cu | equal to or less than 0.2, and |
| Al | equal to or less than 0.07. |

2. The steel powder according to claim 1, wherein the composition comprises 0.27 - 0.37 wt.-% C; preferably 0.28 - 0.34 wt.-% C.

3. The steel powder according to any one of claims 1 or 2, wherein the composition comprises 0.85 - 1.30 wt.-% Si; preferably 0.95 - 1.20 wt.-% Si.

4. The steel powder according to any one of the preceding claims, wherein the composition comprises 0.60 - 0.90 wt.-% Mn; preferably 0.65 - 0.85 wt.-% Mn.

5. The steel powder according to any one of the preceding claims, wherein the composition comprises 1.2 - 1.5 wt.-% Cr; preferably 1.25 - 1.45 wt.-% Cr.

6. The steel powder according to any one of the preceding claims, wherein the composition comprises 0.5 - 1.2 wt.-% Ni; preferably 0.6 - 1.2 wt.-% Ni.

7. The steel powder according to any one of the preceding claims, wherein the composition comprises 0.7 - 0.9 wt.-% Mo.

8. The steel powder according to any one of the preceding claims, wherein the composition comprises 0.07 - 0.20 wt.-% V; preferably 0.08 - 0.16 wt.-% V.

9. The steel powder according to any one of the preceding claims, wherein the composition comprises 0.004 - 0.015 wt.-% Ti; preferably 0.005 - 0.010 wt.-% Ti.

10. The steel powder according to any one of the preceding claims, wherein the composition comprises 0.010 - 0.025 wt.-% Nb.

11. The steel powder according to any one of the preceding claims, wherein the composition comprises 0.001 - 0.004 wt.-% B.

12. The steel powder according to any one of the preceding claims, wherein the composition comprises 0.005 - 0.020 wt.-% N; preferably 0.007 - 0.018 wt.-% N.

13. The steel powder according to any one of the preceding claims, wherein the steel powder is a powder atomized by an atomizing medium comprising or consisting of nitrogen gas.

14. Use of the steel powder according to any one of the preceding claims in the production of components by additive manufacturing, such as by laser powder bed fusion or directed energy deposition.

15. Method for producing a component comprising performing additive manufacturing using the steel powder according to any one of claims 1 to 13.
